# EUROPÄISCHE PATENTSCHRIFT

(11) **EP 2 497 654 B1**
(45) Veröffentlichungstag und Bekanntmachung des Hinweises auf die Patenterteilung: **03.09.2014**
(21) Anmeldenummer: 12170728.5
(22) Anmeldetag: 02.02.2010
(51) Int. Cl.: B60C 5/04, B60C 29/04

(54) **Schlauchsystem**
Hose system
Système de boyau

(30) Priorität: 03.02.2009 DE 102009007163
(43) Veröffentlichungstag der Anmeldung: 12.09.2012
(62) Teilanmeldung aus: 10702834.2
(73) Patentinhaber: Eclipse International AG, 8123 Ebmatingen (CH)
(72) Erfinder: Bauer, Andreas, 8123 Ebmatingen (CH)
(74) Vertreter: Manitz, Finsterwald & Partner GbR

(56) Entgegenhaltungen:
- EP-A1- 0 090 222
- DE-C- 807 485
- GB-A- 446 281
- GB-A- 2 329 162
- GB-A- 191 013 467
- JP-A- 55 044 832

## Beschreibung

Die vorliegende Erfindung betrifft ein Schlauchsystem, insbesondere ein Schlauchsystem für Fahrzeugreifen.

In Fahrzeugreifen eingesetzte Schlauchsysteme umfassen herkömmlicherweise Gummi- bzw. Latexschläuche, die in Ringform gegossen oder deren Enden miteinander verklebt sind, und die eine Wandstärke zwischen 0,45 mm und 3 mm aufweisen. Derartige Schlauchsysteme weisen typischerweise ein relativ hohes Gewicht auf und tragen somit erheblich zu dem Gesamtgewicht beispielsweise eines Fahrzeugreifens bei.

Außerdem erleiden derartige Schlauchsysteme bei typischen Fahrbelastungen wie beispielsweise dem Überfahren einer Bordsteinkante häufig einen Durchschlag oder einen Durchstich, also eine Zerstörung der Schlauchwand, insbesondere wenn der Luftdruck in dem Schlauchsystem niedrig ist.

EP 0 090 222 A1 offenbart ein Schlauchsystem gemäß dem Oberbegriff des Anspruchs 1.

GB 2 329 162 A offenbart einen Polyurethan enthaltenden Schlauch, der in einem Schaum- oder Gummimantel eingebettet ist.

JP 55 044832 A offenbart ein Verfahren zum Montieren eines Polyurethan enthaltenden Schlauchs, ohne den Fahrzeugreifen demontieren zu müssen, wobei ein Ende des langgestreckten Schlauchs abgeschnitten wird und ein Klebstoff auf eine Innenfläche aufgebracht wird.

DE 807 485 C offenbart einen Schlauch mit einem in ein Loch des Schlauchs eingesetzten Ventil, das einen m Inneren des Schlauches angeordneten Halteabschnitt und einen außerhalb des Schlauches angeordneten Funktionsabschnitt aufweist. GB 13467 A und GB 446 281 A offenbaren jeweils einen Schlauch mit einem ähnlichen, in ein Loch des Schlauches eingesetzten Ventil.

Der vorliegenden Erfindung liegt die Aufgabe zugrunde, ein Schlauchsystem zu schaffen, das gegenüber herkömmlichen Schlauchsystemen verbesserte Eigenschaften aufweist.

Zur Lösung dieser Aufgabe ist ein Schlauchsystem mit den Merkmalen des Anspruchs 1 vorgesehen.

Das erfindungsgemäße Schlauchsystem umfasst einen zu einem Ring geformten Schlauch, der Polyurethan enthält und entlang seiner Ausdehnung eine zumindest im Wesentlichen konstante Wandstärke aufweist, wobei der im Wesentlichen konstante Wert der Wandstärke im Bereich zwischen 0,1 mm und 0,4 mm liegt. Der Schlauch weist ein Loch auf, in das ein Ventil eingesetzt ist, welches einen im Inneren des Schlauches angeordneten Halteabschnitt, einen außerhalb des Schlauches angeordneten Funktionsabschnitt und eine Presshülse umfasst, wobei die Presshülse eine innen liegende Anpressfläche aufweist und der Halteabschnitt eine mit der Anpressfläche zusammenwirkende Gegenanpressfläche aufweist, wobei zwischen der Anpressfläche der Presshülse und der Gegenanpressfläche des Halteabschnitts des Ventils ein das Loch des Schlauches umschließender Abschnitt der Schlauchwand eingeklemmt ist und wobei die Anpressfläche der Presshülse und die Gegenanpressfläche des Halteabschnitts konisch ausgebildet sind und die Presshülse im Presssitz an dem Ventil befestigt ist. Die Erfindung erfasst ferner einen Fahrzeugreifen mit einem solchen Schlauchsystem.

Die erfindungsgemäße Ausbildung eines Schlauchs zumindest teilweise aus Polyurethan liefert ein Schlauchsystem mit sehr vorteilhaften mechanischen Eigenschaften. Dabei wird gleichzeitig die für Schlauchsysteme notwendige Elastizität des Schlauches gewährleistet, wenn der Schlauch eine vergleichsweise geringe Wandstärke im Bereich zwischen 0,1 mm und 0,4 mm aufweist, d.h. eine Wandstärke, die geringer ist als die Wandstärke von herkömmlichen Schlauchsystemen verwendeten Schläuchen auf Gummibasis. Insbesondere kann die Wandstärke des Schlauchs zwischen 0,2 mm und 0,3 mm liegen, wobei eine Wandstärke von ca. 0,25 mm bevorzugt ist.

Trotz der niedrigeren Wandstärke des Schlauches weist das erfindungsgemäße Schlauchsystem aufgrund der besonderen mechanischen Eigenschaften von Polyurethan eine deutlich höhere mechanische Belastbarkeit und eine deutlich höhere Resistenz gegenüber Durchschlag und Durchstich auf als herkömmliche Schlauchsysteme. Daher kann das erfindungsgemäße Schlauchsystem mit niedrigeren Luftdrücken verwendet werden, ohne dass dadurch die mechanische Belastbarkeit des Schlauchsystems vermindert wird. Durch die Verwendung niedrigerer Luftdrücke kann der "Grip" des Schlauchsystems, d.h. die Haftreibung gegenüber dem Untergrund erhöht und damit eine verbesserte Kraftübertragung von dem Fahrzeugreifen auf den Untergrund erreicht werden. Aufgrund der mechanischen Eigenschaften von Polyurethan sind die Reibungsverluste zwischen dem Schlauch und einem den Schlauch umgebenden Reifenmantel deutlich geringer als bei einem Fahrzeugreifen mit einem herkömmlichen Schlauchsystem, so dass trotz eines verringerten Luftdrucks bei Verwendung des erfindungsgemäßen Schlauchsystems die inneren Reibungsverluste zwischen Schlauch und Reifenmantel deutlich reduziert werden.

Darüber hinaus ist das Gewicht des erfindungsgemäßen Schlauchsystems aufgrund der geringen Wandstärke des Schlauches gegenüber herkömmlichen Schlauchsystemen stark verringert.

Unter einer im Wesentlichen konstanten Wandstärke wird im Sinne der vorliegenden Erfindung insbesondere verstanden, dass der Wert der Wandstärke entlang der Ausdehnung des Schlauches um maximal 0,09 mm um einen Mittelwert variiert.

Vorteilhafte Ausführungsformen der Erfindung sind in den Unteransprüchen, der Beschreibung und den Zeichnungen beschrieben.

Nach einer vorteilhaften Ausführungsform der Erfindung enthält der Schlauch zwischen 50 Gew.-% und 100 Gew.-%, bevorzugt zwischen 80 Gew.-% und 100 Gew.-%, besonders bevorzugt zwischen 90 Gew.-% und 100 Gew.-% und höchst bevorzugt 100 Gew.-% Polyurethan.

Das Polyurethan kann gemäß der Erfindung vorzugsweise ein Polyurethanhomopolymer, ein Polyurethancopolymer, ein Polyurethanterpolymer oder eine beliebige Mischung aus zwei oder mehr dieser Verbindungen sein.

Grundsätzlich können in dem erfindungsgemäßen Schlauchsystem alle Polyurethan(co)polymere eingesetzt werden, wobei mit Polyester-Polyurethan-Copolymer enthaltenden und insbesondere mit aus einem Polyester-Polyurethan-Copolymer bestehenden Schlauchsystemen besonders gute Ergebnisse erzielt werden. Vorzugsweise kann das Polyester-Polyurethan-Copolymer hierbei ein Polyester-Polyurethan-Elastomer sein.

In Weiterbildung des Erfindungsgedankens wird es vorgeschlagen, in dem Schlauchsystem ein Polyurethan mit einer Härte nach DIN 53505 zwischen 60 und 120 Shore A, mit besonders bevorzugt zwischen 70 und 100 Shore A und beispielsweise von 86 Shore A vorzusehen. Ferner ist es bevorzugt, dass die Dichte des eingesetzten Polyurethans nach DIN EN ISO 1183-1-A zwischen 0,8 und 1,6 g/cm³ und insbesondere zwischen 1,0 und 1,4 g/cm³ liegt. Weiterhin bevorzugt ist es, wenn das eingesetzte Polyurethan eine Zugfestigkeit nach DIN 53504-S2 von zwischen 30 und 70 MPa und insbesondere zwischen 40 und 60 MPa aufweist. Ferner bevorzugte, nach DIN 53504-S2 definierte Eigenschaften sind eine Reißdehnung von zwischen 400 % und 800 %, insbesondere zwischen 500 % und 700 %, eine Spannung bei 20 % Dehnung zwischen 1,4 und 4,2 MPa, insbesondere zwischen 2,2 und 3,4 MPa sowie eine Spannung bei 100 % Dehnung zwischen 4,0 und 7,0 MPa, insbesondere zwischen 5,0 und 6,0 MPa. Für das verwendete Polyurethan ist außerdem ein Weiterreißwiderstand nach DIN ISO 34-1Bb von zwischen 60 und 90 N/mm, insbesondere zwischen 70 und 80 N/mm, bevorzugt sowie ein Abrieb nach DIN ISO 4649-A von zwischen 30 und 50 mm³, insbesondere zwischen 35 und 45 mm³, ein Druckverformungsrest nach DIN ISO 815 von zwischen 20 % und 30 % bei Raumtemperatur und von zwischen 35 % und 55 % bei 70 °C. Ferner bevorzugt sind eine Zugfestigkeit bei 21-tägiger Lagerung in 80 °C warmem Wasser nach DIN 53504-S2 zwischen 20 und 60 MPa, insbesondere zwischen 30 und 50 MPa sowie eine Reißdehnung bei 21-tägiger Lagerung im Wasser nach DIN 53504-S2 zwischen 500 % und 800%, insbesondere zwischen 600 und 700 %.

Wie vorstehend beschrieben, ist der Schlauch des Schlauchsystems zu einem Ring geformt. Insbesondere kann der Schlauch torusförmig ausgebildet sein, das heißt der Schlauch umschließt eine unterbrechungsfreie, ringförmige Luftkammer.

Nach einer vorteilhaften Ausführungsform der Erfindung umfasst der Schlauch zwei Enden, die zur Bildung des Rings miteinander verschweißt sind.

Ein solches Schlauchsystem weist verbesserte mechanische Eigenschaften auf und kann darüber hinaus mit verringertem Aufwand hergestellt werden.

Eine Schweißverbindung zwischen zwei Polyurethan enthaltenden Bereichen weist zum Beispiel gegenüber einer Klebeverbindung eine höhere Dichtigkeit und verbesserte mechanische Eigenschaften auf und ist zudem einfacher herzustellen.

Ein Polyurethan enthaltender Schlauch mit zwei Enden kann zudem mit geringem Aufwand hergestellt werden, sodass ein Schlauchsystem mit einem Schlauch mit zwei Enden, die miteinander verschweißt sind, beispielsweise einfacher hergestellt werden kann, als ein Schlauchsystem mit einem zu einem Ring gegossenen Schlauch.

Hierbei ist es bevorzugt, wenn die zwei Enden des Schlauches überlappend miteinander verschweißt sind.

Bei einer überlappenden Verschweißung ist die Innenseite oder die Außenseite der Schlauchwand in einem von einem Ende des Schlauches ausgehenden Bereich des Schlauches mit der Innenseite oder der Außenseite der Schlauchwand in einem von dem anderen Ende des Schlauches ausgehenden Bereich des Schlauches verschweißt.

Eine solche Verschweißung weist beispielsweise gegenüber einer stumpfen Verschweißung, bei der die beiden Enden des Schlauches jeweils an der Stirnseite der Schlauchwand miteinander verschweißt werden, eine vergrößerte verschweißte Fläche und somit eine erhöhte Dichtigkeit und mechanische Belastbarkeit auf.

Besonders bevorzugt ist es, wenn die Innenseite eines ersten, von einem Ende des Schlauches ausgehenden Abschnitts der Schlauchwand mit der Innenseite eines zweiten, vom anderen Ende des Schlauches ausgehenden Abschnitts der Schlauchwand verschweißt ist.

Das Verschweißen der Innenseite der Schlauchwand im Bereich des einen Endes mit der Innenseite der Schlauchwand im Bereich des anderen Endes der Schlauchwand hat den Vorteil, dass die so gebildete Schweißung eine außen um den verschweißten Schlauch umlaufende Rippe mit einer flansch-ähnlichen Form bildet. Eine solche Verschweißung ist besonders stabil gegenüber mechanischen Zug-, Reib- und Wetzbelastungen.

Ferner bevorzugt ist es, wenn die Innenseite der Schlauchwand zumindest teilweise mit einer Dichtungsflüssigkeit, insbesondere einer Latexdichtungsflüssigkeit, bedeckt ist.

Eine solche Dichtungsflüssigkeit versiegelt kleine in der Herstellung oder dem Betrieb des Schlauchsystems auftretende Einstiche oder Löcher des Schlauches, sodass die Zuverlässigkeit und die Robustheit des Schlauchsystems erhöht sind.

Erfindungsgemäß weist der Schlauch ein Loch auf, in das ein Ventil eingesetzt ist.

Ein solches in ein Loch des Schlauches eingesetztes Ventil verbindet das Innere des Schlauches mit dem Äußeren des Schlauches und erlaubt somit das Zuführen und Abführen von Luft in das Schlauchsystem bzw. aus dem Schlauchsystem durch einen Benutzer, um den Luftdruck in dem Schlauchsystem, beispielsweise zur Anpassung an bestimmte Gegebenheiten des Untergrunds eines Fahrzeugreifens, in dem das Schlauchsystem eingesetzt wird, zu erhöhen bzw. zu verringern.

Das Ventil weist einen im Inneren des Schlauches angeordneten Halteabschnitt und einen außerhalb des Schlauches angeordneten Funktionsabschnitt auf.

Hierbei ist es bevorzugt, wenn ein Querschnitt des Halteabschnitts des Ventils eine Ausdehnung besitzt, die größer als die Ausdehnung des Lochs ist. Durch einen solchen Halteabschnitt kann das Ventil zuverlässig an dem Schlauch befestigt und ein Herausfallen des Ventils verhindert werden.

Erfindungsgemäß weist das Ventil eine Presshülse mit einer innen liegenden Anpressfläche und der Halteabschnitt des Ventils eine mit der Anpressfläche zusammenwirkende Gegenanpressfläche auf.

Zwischen der Anpressfläche der Presshülse und der Gegenanpressfläche des Halteabschnitts des Ventils ist ein das Loch des Schlauches umschließender Abschnitt der Schlauchwand eingeklemmt. Durch ein solches Einklemmen eines solchen Abschnitts der Schlauchwand zwischen der Anpressfläche der Presshülse und der Gegenanpressfläche des Halteabschnitts des Ventils kann das Ventil in besonders effektiver Weise an dem Schlauch befestigt werden.

Dadurch, dass der eingeklemmte Abschnitt der Schlauchwand das Loch umschließt, ist bei dieser Ausbildung sichergestellt, dass das Loch durch die Anpressfläche der Presshülse und die Gegenanpressfläche des Halteabschnitts des Ventils zuverlässig abgedichtet ist.

Erfindungsgemäß sind die Anpressfläche der Presshülse und die Gegenanpressfläche des Halteabschnitts konisch ausgebildet. Eine solche konische Ausbildung reduziert die mechanische Belastung, der der eingeklemmte Bereich der Schlauchwand ausgesetzt ist, da ein Pressen der Schlauchwand gegen scharfe Kanten des Halteabschnitts und der Presshülse vermieden wird.

Insbesondere, wenn ein solches Ventil ausgetauscht wird, wird durch diese Ausbildung verhindert, dass der das Loch umgebende Bereich der Schlauchwand durch das Entfernen der Presshülse zum Entfernen des Ventils oder das Aufbringen einer anderen Presshülse beim Einsetzen eines neuen solchen Ventils beschädigt oder als Ganzes aus dem Schlauch herausgestanzt wird.

Die Presshülse ist an dem Ventil befestigt. Die Befestigung erfolgt dabei erfindungsgemäß durch eine Presspassung, so dass die Presshülse im Presssitz auf dem Ventilkörper sitzt. Grundsätzlich sind auch andere Befestigungsarten möglich. Beispielsweise kann an dem Ventilkörper ein Gewinde vorgesehen sein, auf das die Presshülse oder eine Überwurfmutter zum Niederhalten der Presshülse aufgeschraubt ist.

Die Befestigung der Presshülse im Presssitz an dem Ventil verhindert somit insbesondere ein Lösen der Presshülse von dem Ventil. Dies ist insbesondere deshalb vorteilhaft, da das erfindungsgemäß verwendete Schlauchmaterial eine relativ rutschige Oberfläche besitzt und daher nur durch die konischen Anpressflächen möglicherweise keine ausreichend zuverlässige Verbindung von Presshülse und Halteabschnitt des Ventils gewährleistet werden kann. Durch die Befestigung wird verhindert, dass sich der auf den zwischen der Anpressfläche und der Gegenanpressfläche eingeklemmten Bereich der Schlauchwand wirkende Anpressdruck verringert, z.B. aufgrund einer Lockerung der Presshülse. Somit wird eine mechanisch besonders feste und besonders luftdichte Verbindung zwischen dem Schlauch und dem Ventil gewährleistet.

Nach einer vorteilhaften Weiterbildung der Erfindung ist in den Funktionsabschnitt des Ventils ein herausnehmbarer Ventileinsatz eingesetzt.

Ein solcher herausnehmbarer Ventileinsatz erlaubt bei geöffnetem Ventil das besonders einfache Zu- und Abführen von Luft und gewährleistet bei geschlossenem Ventil eine besonders gute Dichtwirkung. Außerdem kann bei einem solchen Schlauchsystem besonders einfach Dichtflüssigkeit durch das Ventil in den Schlauch eingeführt werden, indem der Ventileinsatz herausgenommen wird.

Ferner bevorzugt ist es, wenn der Schlauch zumindest bereichsweise transparent ist. Dies lässt sich durch entsprechende Wahl des Polyurethans erreichen und hat den Vorteil, dass bei einer Verwendung des Schlauchsystems mit einer Dichtungsflüssigkeit, z.B. einer Latexdichtungsflüssigkeit, der Füllstand der Dichtungsflüssigkeit in dem Schlauch von außen besonders einfach kontrolliert bzw. überwacht werden kann, beispielsweise durch Augenschein.

Neben dem erfindungsgemäßen Schlauchsystem ist hierin ein Verfahren zur Herstellung eines solchen erfindungsgemäßen Schlauchsystems beschrieben. Gemäß diesem Verfahren wird der Schlauch des Schlauchsystems durch ein Extrusionsverfahren hergestellt. Polyurethan lässt sich durch Extrusion sehr gut verarbeiten.

Nach einer ersten vorteilhaften Ausführungsform wird ein Schlauchmaterial durch ein Endlos-Extrusionsverfahren bereitgestellt und der Schlauch durch Abschneiden des Schlauchmaterials auf eine vorgegebene Länge hergestellt. Auf diese Weise kann die Länge des hergestellten Schlauches besonders genau kontrolliert werden.

Besonders bevorzugt ist es, wenn in dem Verfahren die beiden Enden des Schlauches durch Verschweißen mit Heißluft miteinander verbunden werden. Ein solches Verschweißen gewährleistet eine mechanisch besonders belastbare und besonders dichte Verbindung zwischen den beiden Enden des Schlauches.

Ferner bevorzugt ist es, wenn die Innenseite eines ersten, von einem Ende des Schlauches ausgehenden Abschnitts der Schlauchwand mit der Innenseite eines zweiten, von dem anderen Ende des Schlauches ausgehenden Abschnitts der Schlauchwand zur Anlage gebracht wird und der erste und der zweite Abschnitt der Schlauchwand miteinander verschweißt werden.

Bei dieser Ausführungsform des Verfahrens wird die Innenseite des Schlauches an einem Ende des Schlauches also an die Innenseite des Schlauches an dem anderen Ende des Schlauches angelegt und beide Enden dann an den aneinander anliegenden Innenseiten der Schlauchwand miteinander verschweißt.

Besonders vorteilhaft ist es, wenn vor dem Verschweißen der von dem einen Ende des Schlauches ausgehende Abschnitt der Schlauchwand zurückgestülpt wird und der von dem anderen Ende des Schlauches ausgehende Abschnitt der Schlauchwand auf den zurückgestülpten Abschnitt der Schlauchwand aufgeschoben wird.

Auf diese Weise kann die Innenseite des ersten Abschnitts der Schlauchwand mit der Innenseite des zweiten Abschnitts der Schlauchwand zur Anlage gebracht werden. Besonders vorteilhaft ist hierbei, dass durch das Zurückstülpen des einen Abschnitts der Schlauchwand und das Aufschieben des anderen Abschnitts der Schlauchwand aufgrund der Deformation der Schlauchwand in diesem Bereich ein Anpressdruck zwischen beiden Abschnitten der Schlauchwand entsteht, der das Verschweißen der beiden Abschnitte der Schlauchwand erleichtert.

Besonders bevorzugt ist es, wenn vor dem Verschweißen zwei Unterstützungselemente mit einer zumindest im Wesentlichen halbrohrförmigen Kontur zwischen den zurückgestülpten Abschnitt der Schlauchwand und einen von dem zurückgestülpten Abschnitt der Schlauchwand umgriffenen Abschnitt der Schlauchwand eingesetzt werden.

Es kann auch zweckmäßig sein, vor dem Verschweißen zuerst die beiden Unterstützungselemente auf den Schlauch im Bereich des einen Endes des Schlauches aufzusetzen und dann das eine Ende des Schlauches über die Unterstützungselemente zurückzustülpen und dann das andere Ende des Schlauches auf das zurückgestülpte Ende des Schlauches aufzuschieben.

Die Kontur der Unterstützungselemente kann vorteilhafterweise zumindest im Wesentlichen der Kontur des Schlauches in auf einen vorgegebenen Betriebsluftdruck aufgepumpten Zustand entsprechen.

Unterstützungselemente mit halbrohrförmiger Kontur verhindern eine unerwünschte Verformung der zu verschweißenden Abschnitte der Schlauchwand während des Verschweißens und verhindern insbesondere, dass die zu verschweißenden Abschnitte sich während des Verschweißvorgangs voneinander entfernen. Außerdem erlauben die Unterstützungselemente es, zwischen den zu verschweißenden Abschnitten der Schlauchwand einen zusätzlichen Anpressdruck zu erzeugen, wodurch die Anlage der Abschnitte aneinander verbessert und das Verschweißen erleichtert wird.

Die halbrohrförmige Kontur der Unterstützungselemente erlaubt es, die Unterstützungselemente nach dem Verschweißen und der damit einhergehenden Ringbildung wieder von dem Schlauchsystem zu entfernen.

Nach einer weiteren vorteilhaften Ausführungsform des Verfahrens wird in dem Schlauch durch Entfernen eines Bereichs der Schlauchwand ein Loch gebildet und ein Ventil in das Loch eingesetzt, wobei der Querschnitt des Lochs auf einen Querschnitt des Ventils angepasst ist. Ein solches Loch kann beispielsweise durch Herausstanzen oder Herausschneiden gebildet werden.

Besonders bevorzugt ist es, wenn eine Presshülse auf das Ventil aufgepresst wird. Auf diese Weise kann das Ventil an dem Schlauch befestigt und dabei eine hohe mechanische Stabilität der Befestigung sowie eine zuverlässige Abdichtung des Lochs durch die Presshülse des Ventils gewährleistet werden.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine Draufsicht auf ein erfindungsgemäßes Schlauchsystem;
- Fig. 2: einen Längsschnitt durch einen Teilbereich der Schlauchwand des erfindungsgemäßen Schlauchsystems aus Fig. 1 im Bereich einer Verschweißstelle;
- Fig. 3: einen Längsschnitt durch das Ventil des erfindungsgemäßen Schlauchsystems aus Fig. 1 und 2 und durch einen das Ventil umgebenden Teilbereich der Schlauchwand; und
- Fig. 4: einen Längsschnitt durch einen Bereich eines Schlauches, der zwei Enden des Schlauches umfasst, und durch einen Bereich zweier Unterstützungselemente vor dem Verschweißen der zwei Enden des Schlauches gemäß einem beispielhaften Verfahren zur Herstellung eines wie in Fig. 1 bis 3 dargestellten Schlauchsystems.

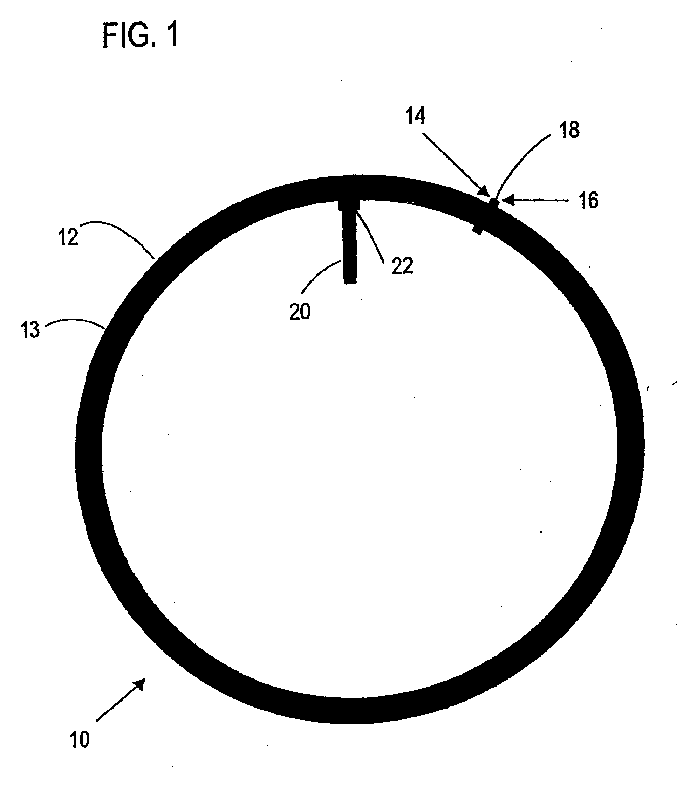

Fig. 1 zeigt ein erfindungsgemäßes Schlauchsystem 10 mit einem zu einem Ring geformten, torusförmigen, Polyurethan enthaltenden Schlauch 12.

Der Schlauch 12 wird durch eine Schlauchwand 13 begrenzt und umfasst zwei Enden 14 und 16, die zur Bildung des Torus miteinander verschweißt sind und eine Verschweißstelle 18 bilden.

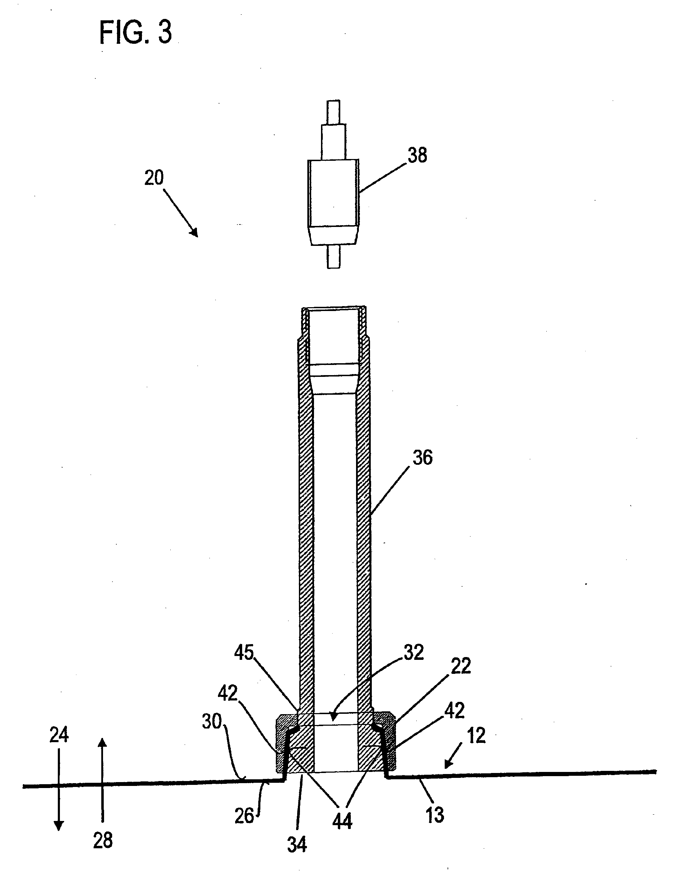

An dem Schlauch 12 ist ein Ventil 20 mittels einer Presshülse 22 befestigt, das unter Bezugnahme auf Fig. 3 noch ausführlicher beschrieben wird.

Das Schlauchsystem 10 ist insbesondere zur Verwendung in einem Fahrradreifen geeignet. Grundsätzlich kann das Schlauchsystem 10 auch bei anderen Reifentypen, beispielsweise bei Motorradreifen, Autoreifen oder Reifen von Anhängern eingesetzt werden.

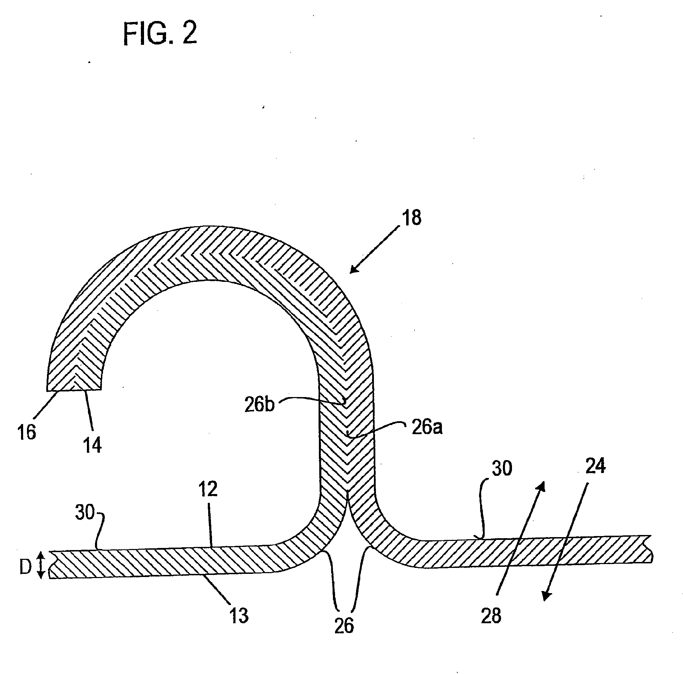

Fig. 2 zeigt einen Längsschnitt durch einen Teilbereich der Schlauchwand 13 des Schlauchsystems aus Fig. 1 im Bereich der Verschweißstelle 18.

Die Schlauchwand 13 weist eine zum Inneren 24 des Schlauches 12 weisende Innenseite 26 und eine zum Äußeren 28 des Schlauches weisende Außenseite 30 auf. Der Schlauch 12 weist entlang seiner Ausdehnung eine näherungsweise konstante Wandstärke D von 0,2 mm auf.

Wie aus Fig. 2 zu erkennen ist, ist die Innenseite 26a eines ersten, von einem Ende 14 des Schlauches 12 ausgehenden Abschnitts der Schlauchwand 13 mit der Innenseite 26b eines zweiten, vom anderen Ende 16 des Schlauches 12 ausgehenden Abschnitts der Schlauchwand 13 verschweißt.

Fig. 3 zeigt einen Längsschnitt durch das in das Loch 32 der Schlauchwand 13 eingesetzte Ventil 20.

Das Ventil 20 umfasst einen im Inneren 24 des Schlauches 12 angeordneten Halteabschnitt 34 und einen im Bereich 28 außerhalb des Schlauches 12 angeordneten Funktionsabschnitt 36 sowie einen in den Funktionsabschnitt 36 einsetzbaren und aus diesem herausnehmbaren Ventileinsatz 38.

Das Ventil umfasst außerdem eine Presshülse 22 mit einer innen liegenden, insbesondere ringförmigen Anpressfläche 42, die konisch ausgebildet ist. Der Halteabschnitt 34 des Ventils 20 weist eine mit der Anpressfläche 42 zusammenwirkende, insbesondere ringförmige Gegenanpressfläche 44 auf, die ebenfalls konisch ausgebildet ist.

Zwischen der Anpressfläche 42 und der Gegenanpressfläche 44 ist ein das Loch 32 des Schlauches 12 umschließender Abschnitt der Schlauchwand 13 eingeklemmt. Auf diese Weise ist das Ventil 20 zuverlässig an dem Schlauch 10 befestigt und gleichzeitig wird das Loch 32 durch die Anpressfläche 42 und die Gegenanpressfläche 44 zuverlässig abgedichtet.

Die Presshülse 22 ist im Presssitz auf einen an dem Ventil zwischen dem Funktionsabschnitt 36 und dem Halteabschnitt 34 vorgesehenen insbesondere ringförmigen Presspassungsabschnitt 45 aufgepresst. Durch das Aufpressen auf den Presspassungsabschnitt 45 ist die Presshülse besonders zuverlässig an dem Ventil 20 befestigt. Es wird insbesondere verhindert, dass sich die Presshülse 22 lockert und sich infolge dessen der eingeklemmte Abschnitt der Schlauchwand 13 von dem Ventil 20 löst.

Fig. 3 zeigt das Ventil 20 bei herausgenommenem Ventileinsatz 38. Bei entnommenem Ventileinsatz 38 ist eine einfache Befüllung des Schlauches 12 mit einer Dichtungsflüssigkeit durch das Ventil 20 hindurch möglich.

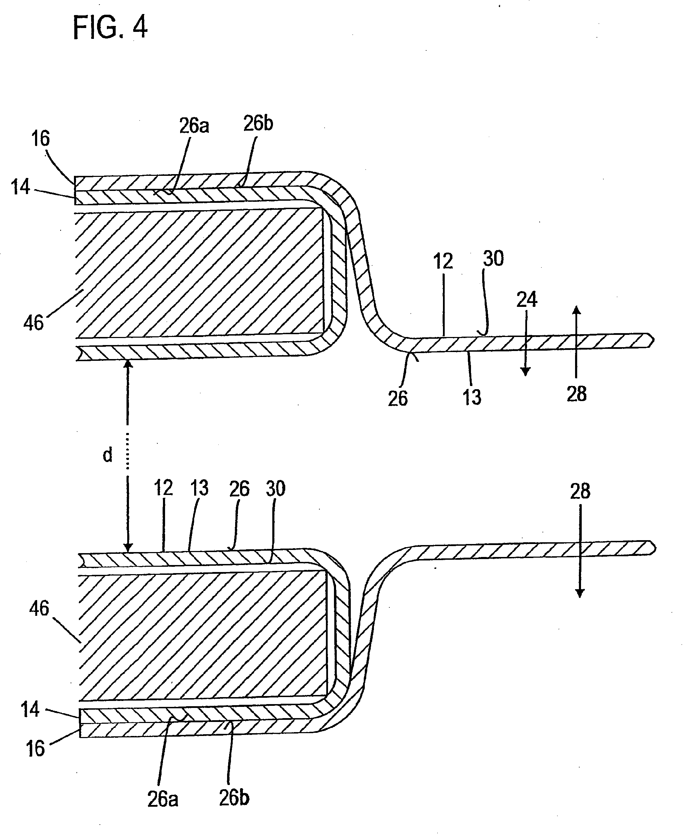

Fig. 4 zeigt einen Längsschnitt durch einen Bereich eines Schlauches 12, der zwei Enden 14 und 16 des Schlauches 12 umfasst.

Der Schlauch 12 wird zur Durchführung eines beispielhaften Verfahrens zur Herstellung eines Schlauchsystems 10, wie es in Fig. 1 bis 3 dargestellt ist, verwendet.

Fig. 4 zeigt den Schlauch 12 unmittelbar vor dem Verschweißen der Innenseite 26a eines ersten, von einem Ende 14 des Schlauches 12 ausgehenden Abschnitts der Schlauchwand 13 mit der Innenseite 26b eines zweiten, vom anderen Ende 16 des Schlauches 12 ausgehenden Abschnitts der Schlauchwand 13.

Wie aus Fig. 4 zu erkennen ist, ist der von dem einen Ende 14 des Schlauches 12 ausgehende Abschnitt der Schlauchwand 13 zurückgestülpt, während der von dem anderen Ende 16 des Schlauches 12 ausgehende Abschnitt der Schlauchwand 13 auf den zurückgestülpten Abschnitt der Schlauchwand 13 aufgeschoben ist.

Zwischen den zurückgestülpten Abschnitt der Schlauchwand 13 und einen von dem zurückgestülpten Abschnitt der Schlauchwand 13 umgriffenen Abschnitt der Schlauchwand 13 sind zwei Unterstützungselemente 46 mit einer halbrohrförmigen Querschnittskontur, die zusammen im Wesentlichen der Querschnittskontur des Schlauches 12 entsprechen, eingesetzt.

Der Abstand d zwischen den beiden in Fig. 4 gezeigten Schnittflächen der Schlauchwand 13 mit der Schnittebene der Zeichnung ist in Fig. 4 nicht maßstäblich dargestellt und kann im vorliegenden Ausführungsbeispiel beispielsweise zwischen 1 cm und 3 cm betragen. Je nach Anwendung kann der Abstand auch deutlich größer sein.

Durch die Unterstützungselemente 46 wird der zurückgestülpte Abschnitt der Schlauchwand 13 gegen den aufgeschobenen Abschnitt der Schlauchwand 13 gedrückt, wodurch eine dichte Anlage beider Abschnitte aneinander erreicht wird, was das anschließende Verschweißen beider Abschnitte erleichtert. Das Verschweißen der beiden Abschnitte erfolgt gemäß dem vorliegenden Ausführungsbeispiel des Verfahrens mit Heißluft.

### Bezugszeichenliste

- 10: Schlauchsystem
- 12: Schlauch
- 13: Schlauchwand
- 14: Ende
- 16: Ende
- 18: Verschweißstelle
- 20: Ventil
- 22: Presshülse
- 24: Inneres
- 26: Innenseite
- 28: außenliegender Bereich
- 30: Außenseite
- 32: Loch
- 34: Halteabschnitt
- 36: Funktionsabschnitt
- 38: Ventileinsatz
- 42: Anpressfläche
- 44: Gegenanpressfläche
- 45: Presspassungsabschnitt
- 46: Unterstützungselement

## Patentansprüche

1. Schlauchsystem, insbesondere für Fahrzeugreifen, mit einem zu einem Ring geformten Schlauch (12), wobei der Schlauch (12) Polyurethan enthält und entlang seiner Ausdehnung eine zumindest im Wesentlichen konstante Wandstärke aufweist, wobei der im Wesentlichen konstante Wert der Wandstärke im Bereich zwischen 0,1 mm und 0,4 mm liegt,
**dadurch gekennzeichnet,**
**dass** der Schlauch (12) ein Loch (32) aufweist, in das ein Ventil (20) eingesetzt ist, welches einen im Inneren (24) des Schlauches (12) angeordneten Halteabschnitt (34), einen außerhalb des Schlauches (12) angeordneten Funktionsabschnitt (36) und eine Presshülse (22) umfasst, wobei die Presshülse (22) eine innen liegende Anpressfläche (42) aufweist und der Halteabschnitt (34) eine mit der Anpressfläche (42) zusammenwirkende Gegenanpressfläche (44) aufweist, wobei zwischen der Anpressfläche (42) der Presshülse (22) und der Gegenanpressfläche (44) des Halteabschnitts (34) des Ventils (20) ein das Loch (32) des Schlauches (12) umschließender Abschnitt der Schlauchwand (13) eingeklemmt ist, und wobei die Anpressfläche (42) der Presshülse (22) und die Gegenanpressfläche (44) des Halteabschnitts (34) konisch ausgebildet sind und die Presshülse (22) im Presssitz (45) an dem Ventil (20) befestigt ist.

2. Schlauchsystem nach Anspruch 1,
**dadurch gekennzeichnet,**
**dass** der Schlauch (12) torusförmig ausgebildet ist und dass das Polyurethan ein Polyurethancopolymer, ein Polyurethanterpolymer oder eine beliebige Mischung aus den vorstehenden Verbindungen enthält oder daraus besteht.

3. Schlauchsystem nach Anspruch 1 oder 2,
**dadurch gekennzeichnet,**
**dass** der Schlauch (12) zwei Enden (14, 16) umfasst, die zur Bildung des Rings überlappend miteinander verschweißt sind, wobei die Innenseite (26a) eines ersten, von einem Ende (14) des Schlauches (12) ausgehenden Abschnitts der Schlauchwand (13) mit der Innenseite (26b) eines zweiten, vom anderen Ende (16) des Schlauches (12) ausgehenden Abschnitts der Schlauchwand (13) verschweißt ist.

4. Schlauchsystem nach zumindest einem der vorstehenden Ansprüche,
**dadurch gekennzeichnet,**
**dass** ein Querschnitt des Halteabschnitts (34) des Ventils (20) eine Ausdehnung besitzt, die größer als die Ausdehnung des Lochs (32) ist.

5. Schlauchsystem zumindest einem der vorstehenden Ansprüche,
**dadurch gekennzeichnet,**
**dass** in den Funktionsabschnitt (36) des Ventils (20) ein herausnehmbarer Ventileinsatz (38) eingesetzt ist.

6. Schlauchsystem nach zumindest einem der vorstehenden Ansprüche,
**dadurch gekennzeichnet,**
**dass** die Innenseite (26) der Schlauchwand (13) zumindest teilweise mit einer Dichtungsflüssigkeit bedeckt ist, insbesondere dass die Dichtungsflüssigkeit eine Latexdichtungsflüssigkeit ist.

7. Schlauchsystem nach zumindest einem der vorstehenden Ansprüche,
**dadurch gekennzeichnet,**
**dass** der Schlauch (12) zumindest bereichsweise transparent ist.

8. Fahrzeugreifen, insbesondere Fahrradreifen, mit einem Schlauchsystem nach einem der Ansprüche 1 bis 7.

## Claims

1. A tube system, in particular for vehicle tires, having a tube (12) shaped into a ring, wherein the tube (12) comprises polyurethane and has an at least substantially constant wall thickness along its extent, wherein the substantially constant value of the wall thickness is in the range between 0.1 mm and 0.4 mm,
**characterized in that**
the tube (12) has a hole (32) into which a valve (20) is inserted, which includes a holding section (34) arranged in the interior (24) of the tube (12), a functional section (36) arranged outside the tube (12), and a press fitting sleeve (22), wherein the press fitting sleeve (22) has an inwardly disposed pressing surface (42) and the holding section (34) has a counter-pressing surface (44) cooperating with the pressing surface (42), wherein a section of the tube wall (13) surrounding the hole (32) of the tube (12) is clamped between the pressing surface (42) of the press fitting sleeve (22) and the counter-pressing surface (44) of the holding section (34) of the valve (20), and wherein the pressing surface (42) of the press fitting sleeve (22) and the counter-pressing surface (44) of the holding section (34) are conical and the press fitting sleeve (22) is fastened to the valve (20) in a press fit (45).

2. A tube system in accordance with claim 1,
**characterized in that**
the tube (12) is toroidal; and **in that** the polyurethane comprises or consists of a polyurethane copolymer, polyurethane terpolymer or any desired mixture of the above compounds.

3. A tube system in accordance with claim 1 or claim 2,
**characterized in that**
the tube (12) comprises two ends (14, 16) which are welded to one another in an overlapping manner to form the ring, wherein the inner side (26a) of a first section of the tube wall (13), which starts from one end (14) of the tube (12), is welded to the inner side (26b) of a second section of the tube wall (13), which starts from the other end (16) of the tube (12).

4. A tube system in accordance with at least one of the preceding claims,
**characterized in that**
a cross-section of the holding section (34) of the valve (20) has an extent which is larger than the extent of the hole (32).

5. A tube system in accordance with at least one of the preceding claims,
**characterized in that**
a removable valve core (38) is inserted into the functional section (36) of the valve (20).

6. A tube system in accordance with at least one of the preceding claims,
**characterized in that**
the inner side (26) of the tube wall (13) is at least partly covered by a sealing liquid; in particular **in that** the sealing liquid is a latex sealing liquid.

7. A tube system in accordance with at least one of the preceding claims,
**characterized in that**
the tube (12) is at least regionally transparent.

8. A vehicle tire, in particular a bicycle tire, having a tube system in accordance with any one of the claims 1 to 7.

## Revendications

1. Système de chambre à air, en particulier pour pneumatique de véhicule, comprenant un tuyau mis sous la forme d'un anneau (12), dans lequel le tuyau (12) contient du polyuréthane et présente le long de son extension une épaisseur de paroi au moins sensiblement constante, dans lequel la valeur sensiblement constante de l'épaisseur de paroi tombe dans une plage entre 0,1 mm et 0,4 mm,
**caractérisé en ce que**
**caractérisé en ce que** le tuyau (12) présente un trou (32) dans lequel une valve (20) est mise en place, laquelle comprend un tronçon de maintien (32) agencé à l'intérieur (24) du tuyau (12), un tronçon fonctionnel (56) agencé à l'extérieur du tuyau (12), et une douille de pressage (22), ladite douille de pressage (22) comportant une surface de pressage (42) située à l'intérieur, et le tronçon de maintien (34) comporte une surface de pressage antagoniste (44) qui coopère avec la surface de pressage (42), dans lequel un tronçon de la paroi de tuyau (13) qui entoure le trou (32) du tuyau (12) est pincé entre la surface de pressage (42) de la douille de pressage (22) et la surface de pressage antagoniste (44) du tronçon de maintien (34) de la valve (20), et dans lequel la surface de pressage (42) de la douille de pressage (22) et la surface de pressage antagoniste (44) du tronçon de maintien (34) sont réalisées sous forme conique, et la douille de pressage (22) est fixée par montage à la presse (45) sur la valve (20).

2. Système de chambre à air selon la revendication 1,
**caractérisé en ce que** le tuyau (12) est réalisé en forme de tore et **en ce que** le polyuréthane contient un copolymère de polyuréthane, un terpolymère de polyuréthane, ou un mélange quelconque des composés précités ou est constitué de celui-ci.

3. Système de chambre à air selon la revendication 1 ou 2,
**caractérisé en ce que** le tuyau (12) présente deux extrémités (14, 16) qui, pour réaliser l'anneau, sont soudées l'une à l'autre en chevauchement, et le côté intérieur (26a) d'un premier tronçon, partant depuis une extrémité (14) du tuyau (12), de la paroi de tuyau (13) est soudé avec le côté intérieur (26b) d'un second tronçon, partant de l'autre extrémité (16) du tuyau (12), de la paroi de tuyau (13).

4. Système de chambre à air selon l'une au moins des revendications précédentes,
**caractérisé en ce qu'**une section transversale du tronçon de maintien (34) de la valve (20) possède une extension qui est supérieure à l'extension du trou (32).

5. Système de chambre à air selon l'une au moins des revendications précédentes,
**caractérisé en ce qu'**un insert de valve (38) amovible est mis en place dans le tronçon fonctionnel (36) de la valve (20).

6. Système de chambre à air selon l'une au moins des revendications précédentes,
**caractérisé en ce que** la face intérieure (26) de la paroi (13) du tuyau est au moins partiellement recouverte d'un liquide d'étanchéité, en particulier **en ce que** le liquide d'étanchéité est un liquide d'étanchéité à base de latex.

7. Système de chambre à air selon l'une au moins des revendications précédentes,
**caractérisé en ce que** le tuyau (12) est transparent au moins localement.

8. Pneumatique de véhicule, en particulier pneumatique de bicyclette, comprenant un système de chambre à air selon l'une des revendications 1 à 7.
